# EUROPEAN PATENT SPECIFICATION

(11) **EP 3 651 584 B1**
(45) Date of publication and mention of the grant of the patent: **28.02.2024**
(21) Application number: 18769242.1
(22) Date of filing: 10.07.2018
(51) Int. Cl.: A23G 9/26, A23G 9/50

(54) **CONFECTION PACKAGE**
KONFEKTPACKUNG
EMBALLAGE DE CONFISERIE

(30) Priority: 11.07.2017 NL 2019232
(43) Date of publication of application: 20.05.2020
(73) Proprietor: What The Future B.V., 1018 LE Amsterdam (NL)
(72) Inventor: ZANEN, Eduard Willem, 1795 AG De Cocksdorp (NL); AUFENAST, Edmund David, 1795 AG De Cocksdorp (NL)
(74) Representative: Cramwinckel, Michiel
(86) International application number: PCT/NL2018/050455
(87) International publication number: WO 2019/013620

(56) References cited:
- WO-A1-2017/125488
- WO-A1-2017/125488
- GB-A- 2 075 327
- JP-U- S54 134 184
- US-A- 2 151 282
- US-A- 2 583 355
- US-A- 2 784 684
- US-A- 4 001 440
- US-A- 4 165 061

## Description

The invention is directed to a confection package comprising of a plastic mould product having a space for a confection filled with a freezable or frozen confection and a space for one end of a handle. The space for the confection and the space for one end of a handle are positioned below a planar surface and a planar cover sheet is sealed to the planar mould product.

GB2075327 describes such a confection package wherein the space for the confection and the space for one end of a handle are fluidly connected. The confection as present in the space for the confection is in a frozen form and will therefore not flow into the space for the handle. A problem is that some of the frozen confection may enter the space for the handle. For example when it part of the confection melts.

Such a confection package is described in US4001440. This publication describes a confection package consisting of a chamber for a frozen confection provided with a handle. Such products are also referred to as ice lollypops. The chamber for the frozen confection has an outer appearance of a character. The exterior part of the handle is placed in a slot. Slot and chamber for the confection are present in a single part of the package. A flat seal enclosed the chamber and slot of the package at their upper end. The handle is kept in its position by a peg present in the slot which locks with a similarly shaped aperture in the exterior part of the handle.

The confection package described in JPS54134184 describes a similar construction as in US4001440.

A disadvantage of the confection package of US4001440 is that liquid confection may flow into the slot before the confection is frozen in an industrial packaging process. This does not have a good appearance which is undesirable for a commercial confection package. The aim of the present invention is to provide a confection package which limits the risk that liquid confection flows towards the exterior part of the handle.

This is achieved by the following confection package comprising of
- a plastic mould product comprising a space for a confection, a space for one end of a handle, and a horizontal planar surface, wherein the space for a confection is fluidly separated from the space for one end of a handle and wherein the space for one end of a handle and the space for a confection is positioned below the planar surface,
- a planar cover sheet sealed to the planar surface of the plastic mould product,
- a volume of a freezable or frozen confection as present within the space for a confection, and
- a handle comprising of an interior part of the handle positioned within the volume of freezable or frozen confection in the space for a confection and an exterior part which in use will allow the volume of freezable confection to be manually held by a user and which exterior part is positioned in the space for one end of the handle, wherein the interior part is connected to the exterior part by means of an offset intermediate part, and wherein
- part of the intermediate part of the handle is sealed at its upper end to the planar cover sheet and at its lower end to an upper end of a wall part of the plastic mould product which wall part horizontally separates the space for a confection from the space for one end of a handle and wherein the upper end of the handle is positioned above the planar surface.

Applicants found that by elevating the offset intermediate part to a position above the planar surface of the of the plastic mould product a liquid barrier results which avoids liquid confection to flow from the space for a confection to the space for one end of a handle.

The invention and further advantages will be further described below. In the description terms like upper, lower, horizontal, vertical, above and below refer to the preferred position of the confection package when it is filled with non-frozen confection. These terms used to describe the confection package more clearly and are not intended to limit the invention to only a confection package in this position.

The offset intermediate part of the handle may suitably consist of three bends, wherein a first bend is between the interior part and intermediate part directing the handle from the confection towards upper end of wall, a second bend at upper end directing the handle towards space for one end of a handle and a third bend connecting the intermediate part and the exterior part of the handle and directing the handle in the direction of the space for one end of a handle, wherein the second bend is comprised in the upper end of the handle.

Alternatively the offset intermediate part of the handle may suitably consist of at least four bends, wherein a first bend is between the interior part and intermediate part directing the handle from the confection towards the planar surface, a second bend which directs a horizontal part of the handle along the planar surface, a third bend which directs the handle towards space for one end of a handle and a fourth bend connecting the intermediate part and the exterior part of the handle and directing the handle in the direction of the space for one end of a handle and wherein the upper end of the handle is comprised in the horizontal part of the handle.

The handle may have any shape which makes the handle suitable to bond to the frozen confection and to be manually held by a user. Preferably the handle comprises an intermediate part and especially the earlier referred to horizontal part wherein intermediate part or horizontal part have a rounded upper surface and a flat lower surface. The upper rounded surface ensures an efficient sealing with the planar cover sheet and the flat lower part ensures a liquid barrier when this flat part rests on a preferred horizontal part of the wall part of the plastic mould product. Preferably the entire handle has a rounded upper surface and a flat lower surface.

The ice lollypop when removed from the confection package will for practical reasons have a handle with an exterior part extending away from the mass of confection. The interior part of the handle will suitably be present centrally or about centrally within the mass of confection. The interior part and the exterior part of the handle may extend in a parallel longitudinal direction. It is however not excluded that the interior part and the exterior part of the handle are positioned under an angle. A preferred handle has an interior part which is aligned with the exterior part of the handle. Even more preferably the interior part and the exterior part have the same shape such that the handle is shape symmetrical. Shape symmetrical handles are preferred because it simplifies the automatic placing the handles in the plastic mould product. Namely a so-called pick and place machine, which may be used for placing the handles, does not have to direct the handle in one direction but can randomly position the handle in the space for one end of the handle and in the space for a confection.

The interior part and the exterior part of the handle are provided with one or more snap-fit type connectors. Any openings or extensions on the surface of the interior part of the handle may ensure a more intimate bonding of the convection with the handle. The snap-fit type connectors have the advantage in that the user can play with the handles by connecting more than one handle after consuming the confection. This is favourable for the environment because the user will more likely keep the handles and not through them away and pollute the environment. The connector preferably consists of a male type element with a female type element which can connect in a snap-fit manner. Such connectors are well known and for example described in GB866557, US3005282, US4552541, US4744780, US4919635, US5230195, US5471808, US2011045733, US2016263489 and US2014227937. The male type element is preferably an extension present at the upper and/or lower side of the handle and has a cylindrical or frusto-conical outer surface. The female type element may be any design opening which can receive the male type element and result in a snap-fit connection with such a male type element. The connectors are preferably spaced such that different arrangements between more than one handle are possible. The snap fit connection is preferably such that it also allows pivoting along the connection when two handles are connected by means of one snap-fit connection.

Suitably an air gap is present between the exterior part of the handle and the bottom of the space for one end of a handle. This avoids that the handle can freeze to the bottom of the space for one end of the handle.

The freezable confection may be frozen or non-frozen. The confection package may be stored and distributed at ambient temperature wherein the confection is not frozen. The end user may for example freeze the non-frozen confection just before consumption at her or his one home. Because the space for a confection and the space for one end of a handle in the plastic mould product are fluidly not connected any risk that liquid confection flows into the space for one end of a handle is low.

The plastic mould product may be made of polymer materials, such as those made from polyester, polyolefin, polypropylene, polystyrene and polyamide. Especially preferred are co-extruded sheets of amorphous polyester and polyolefin, such as that sold under the Registered Trademark MP 300 (Wipak, Poland). The planar cover sheet may be a plastic film, for example a polyester film, especially a biaxilally-orientated polyester film such as the one sold under the registered trademark BIAXER (Wipak, Poland). The film mat be metallised with for example aluminium to increase the insulating properties of the package.

The invention is also directed to a process to prepare a confection package according to the invention. The process comprises the following steps:
(i) combining a handle with a plastic mould product having a space for a confection, a space for one end of a handle, and a horizontal planar surface, wherein the space for a confection is fluidly separated from the space for one end of a handle and wherein the space for one end of a handle and the space for a confection is positioned below the planar surface,
(ii) adding a non-frozen freezable confection as a liquid to the space for a convection, and
(iii) sealing a planar cover sheet to the horizontal planar surface of the plastic mould product and to the upper end of the handle.

Suitably in step (ii) the non-frozen freezable confection is added up to the level defined by the horizontal planar surface.

The plastic mould product may be made by any known manufacturing method, such as for example injection moulding, blow moulding or rotational moulding and is preferably manufactured by thermoforming using a film and a mould. The mould used may have any shape and may be made from any material. Typically such a mould is made from a metal and formed by subtractive manufacturing wherein the mould is manufactured by a controlled material-removal process using one or more machining tools. This method is time consuming and will preferably be used when making a mould suited to make large numbers of the same plastic moulded products. When one desires to manufacture plastic mould products according to the invention having varying designs in small numbers it is preferred to manufacture the mould by means of addition manufacturing, also referred to as 3D-printing. Applicants found that by using 3D printing it is possible to simply make a mould having a bespoke shape which can be economically used for making plastic moulded products in a relatively small number.

The above 3D printing is especially used in a method which allows a client located at their computer to transmit data via a data communication network to a computer under control of a manufacturer of the mould. The client computer could be a traditional desktop computer, a laptop, or tablet, or a mobile device such as a smart-phone, and preferably remote from the mould manufacturer's computer. The data transmitted across the network is a representation of the shape of the frozen confection and thus of the plastic moulded product. This could be in the form of a photograph or other 2-dimensional graphic to be interpreted by the mould manufacturer to form a 3-D model, or a digital representation of a 3-D model itself. The data communication network would typically be the Internet.

The supplier receives the data, which is then prepared for making the mould used in the thermoforming process. A stage of 3-D model optimisation may be included in the process, wherein the optimisation may comprise any one of the following steps:
i) Transformation of a 2-D representation of an object into a 3-D model. This could be carried out automatically with image processing software, or could include or consist of input from a human operative.
ii) Removal of undercuts in a 3-D model so produced, or received by the supplier, to ensure that the plastic moulded product can be readily removed from the mould after solidification.
iii) Removal of unwanted or unnecessary background information or image content that might otherwise lead to unwanted material at the edges of the plastic moulded product.
iv) Scaling of the 3-D model, either maintaining the aspect ratio in all three dimensions, or selectively scaling one or two dimensions such the 3D printing produces moulds that may be accommodated in the forming station and/or produces a desired mould volume.

Following optimisation of the 3-D model, a mould is created by the use of 3D printing. A number of 3-D printing technologies will be available to the skilled addressee, printing in a range of materials including plaster (e.g. with the 3-D printer sold under the Registered Trademark "ProJet^{®} 660 Pro" by 3D systems Inc., USA), thermoplastics, photopolymerised polymers, or thermallysintered materials. In particularly preferred embodiments, the mould is produced using thermal sintering (preferably by laser) of materials such as that sold under the Registered Trademark Alumide^{®}, and comprising a powdered composition of polyamide and powdered aluminium. The inventors have found that such a process and material produce a mould that is particularly effective at resisting the temperatures applied in the thermoforming process.

When the mould is made by 3D printing using a material having a low thermal conductivity as described above it is preferred that the mould is provided with a number of openings which fluidly connect the side of the mould facing the mould product and the opposite side. The thickness of the mould is preferably between 0.5 and 5 mm. The holes are typically less than 2 mm in diameter, and preferably less than 1 mm in diameter. The openings allow air to escape through the mould during the forming process. The mould is further suitably provided with channels for passage of cooling air. Cooling of the mould enhances the moulded product to solidy into its desired shape in the mould.

To form a plastic mould product a sheet of thermoplastic material is placed over the mould and a pressure differential is created over the sheet material while the material is heated above its softening point. The pressure differential is typically created by use of a vacuum below the sheet with heating carried out by an infra-red source. The mould forming process is well-known in the art as vacuum forming . Particularly preferred materials for forming the moulded product are sheet polymeric materials, such as those made from polyester, polyolefin, polypropylene, polystyrene and polyamide. Especially preferred are co-extruded sheets of amorphous polyester and polyolefin, such as that sold under the Registered Trademark MP 300 (Wipak, Poland). The sheet materials preferably have a thickness of less than 1 mm and even more preferably between 100 and 500 microns.

The above described thermoforming process and the above described process to make the confection package is suitably performed in an automated thermoforming apparatus comprising of a plastic mould product forming station which provides the plastic mould product by thermoforming, a handle placing station, a non-frozen confection loading station, a sealing station and a cutting station.

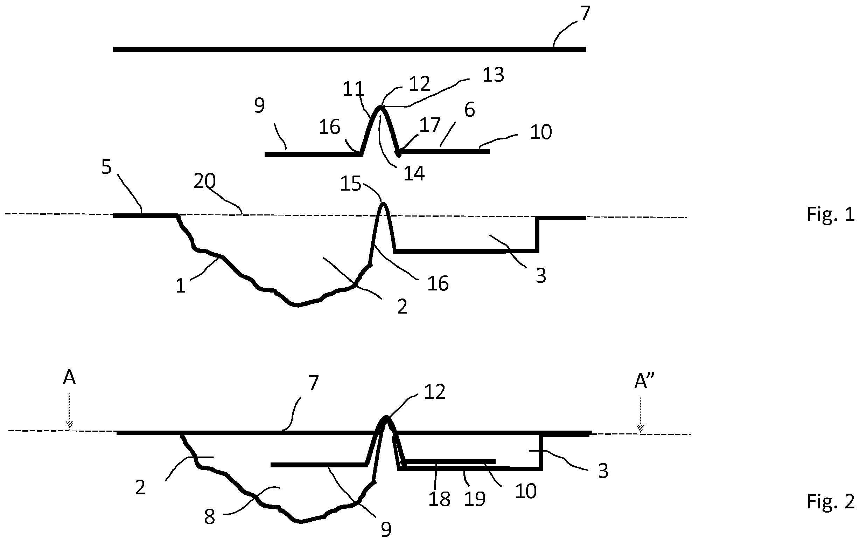

The invention will be further illustrated by making use of Figures 1-9.

Figure 1 schematically shows three elements of the confection package according to this invention as separate items, namely the planar cover sheet 7, the handle 6 and the plastic mould product 1. Figure 2 shows these three items as one combined confection package.

The plastic mould product 1 has a space 2 for a confection, a space 3 for one end of a handle 6, and a horizontal planar surface 5. Space 2 for a confection is fluidly separated from the space 3 for one end of a handle 6 by wall part 16 having an upper end 15. Space 3 for one end of a handle 6 and space 2 for a confection is positioned below the planar surface 5.

The handle 6 has an interior part 9 of the handle 6 and an exterior part 10 which in use will allow the volume of freezable confection 8 to be manually held by a user. The handle is provided with an off-set intermediate part 11. The offset intermediate part 11 of the handle 6 consists of three bends, wherein a first bend 16 is between the horizontal interior part 9 and intermediate part 11 directing the handle 6 upwards, a second bend 12 directing the handle 6 downwards and a third bend 18 connecting the intermediate part 11 and the exterior part 10 of the handle 6 and directing the handle in a horizontal direction.

The interior part 9 and the exterior part 10 of the handle 6 of Figure 1 extend in a parallel longitudinal direction, are aligned and have the same shape. Handle 6 is shape symmetrical.

In Figure 2 it is shown how these three items are combined. The offset intermediate part 11 is sealed at its at its upper end 13 to the planar cover sheet 7 and at its lower end 14 to an upper end 15 of a wall part 16. The planar cover sheet 7 is also sealed to the planar surface 5 of the plastic mould product 1. A volume of a freezable or frozen confection 8 is present within the space 2 for a confection. An air gap 18 is present between the exterior part 10 of the handle 6 and the bottom 19 of the space 3 for one end of a handle 6. Figure 2 also shows that the upper end 13 of the handle 6 is positioned above the planar surface 5.

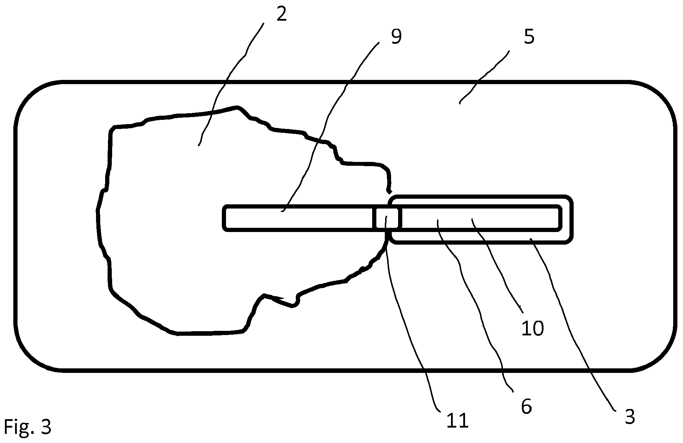

Figure 3 shows a top view of the confection package of Figure 2. The numbers have the same meaning as in Figures 1-2.

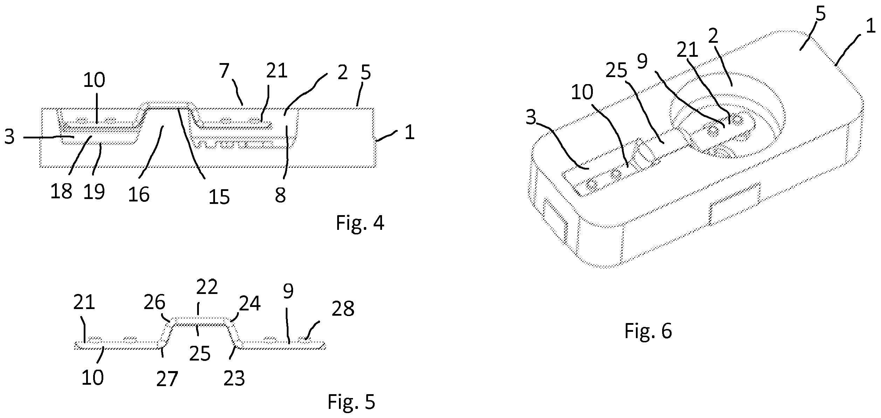

Figure 4 is an example of how the confection package according to this invention may appear. Figure 4 is a cross-sectional view of the confection package similar to the view of Figure 2. Similar components are provided with the same numerals as in Figures 1-3. A difference with the earlier figures is that the handle 21, as shown in Figure 5, has an intermediate part 22 consisting of four bends. A first bend 23 between the interior part 9 and intermediate part 22 directing the handle from the confection towards the planar surface 5, a second bend 24 which directs a horizontal part 25 of the handle 21 along the planar surface 5, a third bend 26 which directs the handle 21 towards space 3 for one end of a handle 6 and a fourth bend 27 connecting the intermediate part 11 and the exterior part 10 of the handle 6 and directing the handle in the direction of the space 3. Handle 21 is further provided with a male connector 28 of a snap-fit connector. Figure 6 is a three dimensional view of the confection package of Figure 4 wherein the cover sheet 7 is not shown.

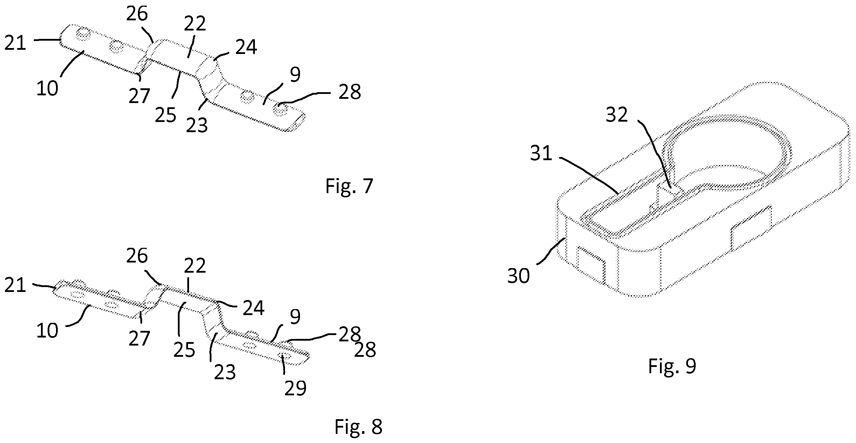

Figure 7 shows a top view of the handle 21 of Figure 5 and Figure 8 shows a view from below of the handle 21 of Figure 5. In Figure 8 four female connectors 29 are shown which can make a snap fir connection with any of the four male connectors 28 as present on another handle 21. Structures like for example towers, bridges and buildings may thus be created using multiple handles interconnected by these male and female connectors 28,29.

Figure 9 shows a sealing mould 30, used to seal planar sheet 7 to planar surface 5 and to the upper side of horizontal part 25 of the handle 21. The sealing mould 30 is provided with a gasket groove 31 and a press block 32. Press block 32 pressed and seals the lower side of horizontal part 25 to the upper end 15 of a wall part 16. Sealing mould 30 may be manufactured by the same manufacturing techniques described for the mould used to make the moulded product 1 as illustrated in Figures 1, 2 , 4 and 6. If the mould is manufactured by 3D printing it is preferred that the sealing mould 30 is also made by 3D printing.

## Claims

1. Confection package comprising of
- a plastic mould product (1) comprising a space (2) for a confection, a space (3) for one end of a handle (6), and a horizontal planar surface (5), wherein the space (2) for a confection is fluidly separated from the space (3) for one end of a handle (6) and wherein the space (3) for one end of a handle (6) and the space (2) for a confection is positioned below the planar surface (5),
- a planar cover sheet (7) sealed to the planar surface (5) of the plastic mould product (1),
- a volume of a freezable or frozen confection (8) as present within the space (2) for a confection, and
- a handle (6) comprising of an interior part (9) of the handle (6) which is positioned within the volume of freezable or frozen confection (8) in the space (2) for a confection and an exterior part (10) which in use will allow the volume of freezable confection (8) to be manually held by a user and which exterior part (10) is positioned in the space (3) for one end of the handle (6), wherein the interior part (9) is connected to the exterior part (10) by means of an offset intermediate part (11,22), and wherein
- part of the intermediate part (11,22) of the handle (6) is sealed at its upper end (13) to the planar cover sheet (7) and at its lower end (14) to an upper end (15) of a wall part (16) of the plastic mould product (1) which wall part (16) horizontally separates the space (2) for a confection from the space (3) for one end of a handle (6) and wherein the upper end (13) of the handle (6) is positioned above the planar surface (5).

2. Confection package according to claim 1, wherein the offset intermediate part (11) of the handle consists of three bends, wherein a first bend is between the interior part (9) and intermediate part directing the handle from the confection towards upper end (15) of wall (16), a second bend at upper end (15) directing the handle towards space (3) for one end of a handle (6) and a third bend connecting the intermediate part (11) and the exterior part (10) of the handle (6) and directing the handle in the direction of the space (3) for one end of a handle (6), wherein the second bend is comprised in the upper end (13) of the handle (6).

3. Confection package according to claim 1, wherein the offset intermediate part (22) of the handle consists of at least 4 bends, wherein a first bend (23) is between the interior part (9) and intermediate part directing the handle from the confection towards the planar surface (5), a second bend (24) which directs a horizontal part (25) of the handle along the planar surface (5), a third bend (26) which directs the handle towards space (3) for one end of a handle (6) and a fourth bend (27) connecting the intermediate part (11) and the exterior part (10) of the handle (6) and directing the handle in the direction of the space (3) for one end of a handle (6) and wherein the upper end (13) of the handle (6) is comprised in the horizontal part (25) of the handle (6) .

4. Confection package according to any one of claims 1-3, wherein the handle (6) has a rounded upper surface and a flat lower surface.

5. Confection package according to any one of claims 1-4, wherein the interior part (9) and the exterior part (10) of the handle extend in a parallel longitudinal direction.

6. Confection package according to claim 5, wherein the interior part (9) and the exterior part (10) of the handle are aligned.

7. Confection package according to claim 6, wherein the interior part (9) and the exterior part (10) have the same shape such that the handle (6) is shape symmetrical.

8. Confection package according to claim 7, wherein the interior part (9) and the exterior part (10) of the handle are provided with one or more snap-fit type connectors (28).

9. Confection package according to any one of claims 1-8, wherein an air gap (18) is present between the exterior part (10) of the handle (6) and the bottom (19) of the space (3) for one end of a handle (6).

10. Confection package according to any one of claims 1-9, wherein the freezable confection is not frozen.

11. Process to prepare a confection package according to any one of claims 1-10, comprising the following steps:
(i) combining a handle (6) with a plastic mould product having a space (2) for a confection, a space (3) for one end of a handle (6), and a horizontal planar surface (5), wherein the space (2) for a confection is fluidly separated from the space (3) for one end of a handle (6) and wherein the space (3) for one end of a handle (6) and the space (2) for a confection is positioned below the planar surface (5),
(ii) adding a non-frozen freezable confection as a liquid to the space (2) for a convection, and
(iii) sealing a planar cover sheet (7) to the horizontal planar surface (5) of the plastic mould product (1) and to the upper end (13) of the handle (6).

12. Process according to claim 11, wherein in step (ii) the non-frozen freezable confection is added up to the level defined by the horizontal planar surface (5).

13. Process according to any one of claims 11-12, wherein a thermoforming apparatus is used comprising of a plastic mould product forming station which provides the plastic mould product by thermoforming, a handle placing station, a non-frozen confection loading station, a sealing station and a cutting station.

14. Process according to claim 13, wherein the plastic mould product forming station makes use of a mould obtained by 3D printing.

15. Process according to any one of claims 13-14, wherein the sealing station makes use of a sealing mould (30) obtained by 3D printing.

## Patentansprüche

1. Süßwarenverpackung, bestehend aus
- einem Kunststoffformprodukt (1), umfassend einen Raum (2) für eine Süßware, einen Raum (3) für ein Ende eines Griffs (6) und eine horizontale ebene Oberfläche (5), wobei der Raum (2) für eine Süßware von dem Raum (3) für ein Ende eines Griffs (6) fluidisch getrennt ist, und wobei der Raum (3) für ein Ende eines Griffs (6) und der Raum (2) für eine Süßware unter der ebenen Oberfläche (5) positioniert ist,
- einer ebenen Abdeckschicht (7), die an der ebenen Oberfläche (5) des Kunststoffformprodukts (1) abgedichtet ist,
- einem Volumen einer einfrierbaren oder eingefrorenen Süßware (8), wie sie innerhalb des Raums (2) für eine Süßware vorhanden ist, und
- einem Griff (6), bestehend aus einem Innenteil (9) des Griffs (6), der innerhalb des Volumens von einfrierbarer oder eingefrorener Süßware (8) in dem Raum (2) für eine Süßware positioniert ist, und einem Außenteil (10), der in Verwendung dem Volumen der einfrierbaren Süßware (8) ermöglicht, durch einen Benutzer manuell gehalten zu werden, und wobei der Außenteil (10) in dem Raum (3) für ein Ende des Griffs (6) positioniert ist, wobei der Innenteil (9) mittels eines versetzten Zwischenteils (11,22) mit dem Außenteil (10) verbunden ist, und wobei
- ein Teil des Zwischenteils (11,22) des Griffs (6) an seinem oberen Ende (13) an der ebenen Abdeckschicht (7) und an seinem unteren Ende (14) an einem oberen Ende (15) eines Wandteils (16) des Kunststoffformprodukts (1) abgedichtet ist, wobei der Wandteil (16) den Raum (2) für eine Süßware von dem Raum (3) für ein Ende eines Griffs (6) horizontal trennt, und wobei das obere Ende (13) des Griffs (6) über der ebenen Oberfläche (5) positioniert ist.

2. Süßwarenverpackung nach Anspruch 1, wobei der versetzte Zwischenteil (11) des Griffs aus drei Biegungen besteht, wobei sich eine erste Biegung zwischen dem Innenteil (9) und dem Zwischenteil befindet, die den Griff von der Süßware zu dem oberen Ende (15) der Wand (16) lenkt, einer zweiten Biegung an dem oberen Ende (15), die den Griff zu dem Raum (3) für ein Ende eines Griffs (6) lenkt, und einer dritten Biegung, die das Zwischenteil (11) und den Außenteil (10) des Griffs (6) verbindet und den Griff in die Richtung des Raums (3) für ein Ende eines Griffs (6) lenkt, wobei die zweite Biegung in dem oberen Ende (13) des Griffs (6) enthalten ist.

3. Süßwarenverpackung nach Anspruch 1, wobei der versetzte Zwischenteil (22) des Griffs aus mindestens 4 Biegungen besteht, wobei sich eine erste Biegung (23) zwischen dem Innenteil (9) und dem Zwischenteil befindet, die den Griff von der Süßware zu der ebenen Oberfläche (5) lenkt, einer zweiten Biegung (24), die einen horizontalen Teil (25) des Griffs entlang der ebenen Oberfläche (5) lenkt, einer dritten Biegung (26), die den Griff zu dem Raum (3) für ein Ende eines Griffs (6) lenkt, und einer vierten Biegung (27), die den Zwischenteil (11) und den Außenteil (10) des Griffs (6) verbindet und den Griff in die Richtung des Raums (3) für ein Ende eines Griffs (6) lenkt, und wobei das obere Ende (13) des Griffs (6) in dem horizontalen Teil (25) des Griffs (6) enthalten ist.

4. Süßwarenverpackung nach einem der Ansprüche 1 bis 3, wobei der Griff (6) eine abgerundete obere Oberfläche und eine flache untere Oberfläche aufweist.

5. Süßwarenverpackung nach einem der Ansprüche 1 bis 4, wobei sich der Innenteil (9) und der Außenteil (10) des Griffs in eine parallele Längsrichtung erstrecken.

6. Süßwarenverpackung nach Anspruch 5, wobei der Innenteil (9) und der Außenteil (10) des Griffs ausgerichtet sind.

7. Süßwarenverpackung nach Anspruch 6, wobei der Innenteil (9) und der Außenteil (10) die gleiche Form aufweisen, derart, dass der Griff (6) formsymmetrisch ist.

8. Süßwarenverpackung nach Anspruch 7, wobei der Innenteil (9) und der Außenteil (10) des Griffs mit einem oder mehreren Schnapppasssverbindern (28) versehen sind.

9. Süßwarenverpackung nach einem der Ansprüche 1 bis 8, wobei ein Luftspalt (18) zwischen dem Außenteil (10) des Griffs (6) und dem Boden (19) des Raums (3) für ein Ende eines Griffs (6) vorhanden ist.

10. Süßwarenverpackung nach einem der Ansprüche 1 bis 9, wobei die einfrierbare Süßware nicht eingefroren ist.

11. Verfahren zum Herstellen einer Süßwarenverpackung nach einem der Ansprüche 1 bis 10, umfassend die folgenden Schritte:
(i) Kombinieren eines Griffs (6) mit einem Kunststoffformprodukt, das einen Raum (2) für eine Süßware, einen Raum (3) für ein Ende eines Griffs (6) und eine horizontale ebene Oberfläche (5) aufweist, wobei der Raum (2) für eine Süßware von dem Raum (3) für ein Ende eines Griffs (6) fluidisch getrennt ist, und wobei der Raum (3) für ein Ende eines Griffs (6) und der Raum (2) für eine Süßware unter der ebenen Oberfläche (5) positioniert ist,
(ii) Hinzufügen einer nicht eingefrorenen einfrierbaren Süßware als eine Flüssigkeit in den Raum (2) für eine Süßware, und
(iii) Abdichten einer ebenen Abdeckschicht (7) an der horizontalen ebenen Oberfläche (5) des Kunststoffformprodukts (1) und an dem oberen Ende (13) des Griffs (6).

12. Prozess nach Anspruch 11, wobei in Schritt (ii) die nicht eingefrorene einfrierbare Süßware bis zu dem Niveau hinzugefügt wird, das durch die horizontale ebene Oberfläche (5) definiert ist.

13. Verfahren nach einem der Ansprüche 11 bis 12, wobei eine Thermoformeinrichtung verwendet wird, die aus einer Kunststoffformproduktformstation, die das Kunststoffformprodukt durch Thermoformen bereitstellt, einer Griffplatzierungsstation, einer Ladestation für nicht eingefrorene Süßware, einer Abdichtungsstation und einer Schneidestation besteht.

14. Verfahren nach Anspruch 13, wobei die Kunststoffformproduktformstation eine Form nutzt, die durch 3D-Drucken erhalten wird.

15. Verfahren nach einem der Ansprüche 13 bis 14, wobei die Abdichtungsstation eine Dichtform (30) nutzt, die durch 3D-Drucken erhalten wird.

## Revendications

1. Emballage de confiserie comprenant
- un produit de moule en plastique (1) comprenant un espace (2) pour une confiserie, un espace (3) pour une extrémité d'une poignée (6), et une surface plane horizontale (5), dans lequel l'espace (2) pour une confiserie est séparé fluidiquement de l'espace (3) pour une extrémité d'une poignée (6) et dans lequel l'espace (3) pour une extrémité d'une poignée (6) et l'espace (2) pour une confiserie sont positionnés en dessous de la surface plane (5),
- une feuille de couverture plane (7) scellée à la surface plane (5) du produit de moule en plastique (1),
- un volume d'une confiserie congelable ou congelée (8) telle que présente à l'intérieur de l'espace (2) pour une confiserie, et
- une poignée (6) comprenant une partie intérieure (9) de la poignée (6) qui est positionnée à l'intérieur du volume de confiserie congelable ou congelée (8) dans l'espace (2) pour une confiserie et une partie extérieure (10) qui, lors de l'utilisation, permettra au volume de confiserie congelable (8) d'être tenu manuellement par un utilisateur et laquelle partie extérieure (10) est positionnée dans l'espace (3) pour une extrémité de la poignée (6), dans lequel la partie intérieure (9) est reliée à la partie extérieure (10) au moyen d'une partie intermédiaire décalée (11, 22), et dans lequel
- une partie de la partie intermédiaire (11, 22) de la poignée (6) est scellée au niveau de son extrémité supérieure (13) à la feuille de couverture plane (7) et au niveau de son extrémité inférieure (14) à une extrémité supérieure (15) d'une partie de paroi (16) du produit de moule en plastique (1) laquelle partie de paroi (16) sépare horizontalement l'espace (2) pour une confiserie de l'espace (3) pour une extrémité d'une poignée (6) et dans lequel l'extrémité supérieure (13) de la poignée (6) est positionnée au-dessus de la surface plane (5).

2. Emballage de confiserie selon la revendication 1, dans lequel la partie intermédiaire décalée (11) de la poignée est constituée de trois coudes, dans lequel un premier coude se trouve entre la partie intérieure (9) et la partie intermédiaire dirigeant la poignée de la confiserie vers l'extrémité supérieure (15) d'une paroi (16), un deuxième coude au niveau de l'extrémité supérieure (15) dirigeant la poignée vers l'espace (3) pour une extrémité d'une poignée (6) et un troisième coude reliant la partie intermédiaire (11) et la partie extérieure (10) de la poignée (6) et dirigeant la poignée dans la direction de l'espace (3) pour une extrémité d'une poignée (6), dans lequel le deuxième coude est compris dans l'extrémité supérieure (13) de la poignée (6).

3. Emballage de confiserie selon la revendication 1, dans lequel la partie intermédiaire décalée (22) de la poignée est constituée d'au moins 4 coudes, dans lequel un premier coude (23) se trouve entre la partie intérieure (9) et la partie intermédiaire dirigeant la poignée de la confiserie vers la surface plane (5), un deuxième coude (24) qui dirige une partie horizontale (25) de la poignée le long de la surface plane (5), un troisième coude (26) qui dirige la poignée vers l'espace (3) pour une extrémité d'une poignée (6) et un quatrième coude (27) reliant la partie intermédiaire (11) et la partie extérieure (10) de la poignée (6) et dirigeant la poignée dans la direction de l'espace (3) pour une extrémité d'une poignée (6) et dans lequel l'extrémité supérieure (13) de la poignée (6) est comprise dans la partie horizontale (25) de la poignée (6).

4. Emballage de confiserie selon l'une quelconque des revendications 1 à 3, dans lequel la poignée (6) présente une surface supérieure arrondie et une surface inférieure plate.

5. Emballage de confiserie selon l'une quelconque des revendications 1 à 4, dans lequel la partie intérieure (9) et la partie extérieure (10) de la poignée s'étendent dans une direction longitudinale parallèle.

6. Emballage de confiserie selon la revendication 5, dans lequel la partie intérieure (9) et la partie extérieure (10) de la poignée sont alignées.

7. Emballage de confiserie selon la revendication 6, dans lequel la partie intérieure (9) et la partie extérieure (10) ont la même forme de telle sorte que la poignée (6) est de forme symétrique.

8. Emballage de confiserie selon la revendication 7, dans lequel la partie intérieure (9) et la partie extérieure (10) de la poignée sont pourvues d'une ou plusieurs liaisons de type encliquetage (28).

9. Emballage de confiserie selon l'une quelconque des revendications 1 à 8, dans lequel un entrefer (18) est présent entre la partie extérieure (10) de la poignée (6) et le fond (19) de l'espace (3) pour une extrémité d'une poignée (6).

10. Emballage de confiserie selon l'une quelconque des revendications 1 à 9, dans lequel la confiserie congelable n'est pas congelée.

11. Procédé permettant de préparer un emballage de confiserie selon l'une quelconque des revendications 1 à 10, comprenant les étapes suivantes :
(i) la combinaison d'une poignée (6) avec un produit de moule en plastique ayant un espace (2) pour une confiserie, un espace (3) pour une extrémité d'une poignée (6), et une surface plane horizontale (5), dans lequel l'espace (2) pour une confiserie est séparé fluidiquement de l'espace (3) pour une extrémité d'une poignée (6) et dans lequel l'espace (3) pour une extrémité d'une poignée (6) et l'espace (2) pour une confiserie est positionné en dessous de la surface plane (5),
(ii) l'ajout d'une confiserie congelable non congelée en tant que liquide dans l'espace (2) pour une confiserie, et
(iii) le scellement d'une feuille de couverture plane (7) à la surface plane horizontale (5) du produit de moule en plastique (1) et à l'extrémité supérieure (13) de la poignée (6).

12. Procédé selon la revendication 11, dans lequel, à l'étape (ii), la confiserie congelable non congelée est ajoutée jusqu'au niveau défini par la surface plane horizontale (5).

13. Procédé selon l'une quelconque des revendications 11 à 12, dans lequel un appareil de thermoformage est utilisé comprenant un poste de formage de produit de moule en plastique qui fournit le produit de moule en plastique par thermoformage, une station de placement de poignée, une station de chargement de confiserie non congelée, un poste de scellage et un poste de découpe.

14. Procédé selon la revendication 13, dans lequel le poste de formage du produit de moule en plastique utilise un moule obtenu par impression 3D.

15. Procédé selon l'une quelconque des revendications 13 à 14, dans lequel le poste d'étanchéité utilise un moule d'étanchéité (30) obtenu par impression 3D.
